(19)

Europäisches Patentamt

European Patent Office

Office européen des brevets

(11) **EP 3 491 254 B1**

(12) **EUROPÄISCHE PATENTSCHRIFT**

(45) Veröffentlichungstag und Bekanntmachung des Hinweises auf die Patenterteilung:
**26.01.2022  Patentblatt 2022/04**

(21) Anmeldenummer: **17768343.0**

(22) Anmeldetag: **25.07.2017**

(51) Internationale Patentklassifikation (IPC):
**F15B 15/14** *(2006.01)*      **F16J 1/12** *(2006.01)*

(52) Gemeinsame Patentklassifikation (CPC):
**F15B 15/1447;** F16J 1/12

(86) Internationale Anmeldenummer:
**PCT/DE2017/000221**

(87) Internationale Veröffentlichungsnummer:
**WO 2018/019319 (01.02.2018 Gazette 2018/05)**

(54) **KOLBENEINHEIT EINES HYDRAULIKZYLINDERS**

PISTON UNIT OF A HYDRAULIC CYLINDER

UNITÉ PISTON D'UN VÉRIN HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2016   DE 202016004643 U**

(43) Veröffentlichungstag der Anmeldung:
**05.06.2019   Patentblatt 2019/23**

(73) Patentinhaber: **Bümach Engineering International B.V.
7826 TA Emmen (NL)**

(72) Erfinder: **BUETER, Josef
49733 Haren/Altenberge (DE)**

(74) Vertreter: **Weihrauch, Frank et al
Dr. Weihrauch & Haussingen
Patent- und Rechtsanwälte
W.-Seelenbinder-Straße 17
98529 Suhl (DE)**

(56) Entgegenhaltungen:
CN-A- 104 373 416      GB-A- 1 265 639
GB-A- 2 276 220      US-A- 479 406

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Kolbeneinheit eines Hydraulikzylinders und dabei insbesondere die Kopplung eines Kolbens mit einer Kolbenstange.

Bei Hydraulikzylindern handelt es sich um Arbeitszylinder, welche mit Hilfe von Hydraulikfluiden betrieben werden. Der hydraulische Druckstrom wird von dem Hydraulikzylinder in eine einfach steuerbare und geradlinig wirkende Kraft umgesetzt.

Aus dem Stand der Technik sind Hydraulikzylinder in unterschiedlichen Bauformen bekannt, wobei sich der grundsätzliche Aufbau meist aus einem Zylinderrohr mit am jeweiligen Ende anschließenden Verschlussteilen, einem Kolben sowie einer Kolbenstange zusammensetzt.

Um eine Übertragung der axial wirkenden Kräfte zu ermöglichen ist es erforderlich, eine zuverlässige, vorzugsweise lösbare Kopplung zwischen dem Kolben und der Kolbenstange bereitzustellen. Zur Erreichung einer derartigen Kopplung bieten die aus dem Stand der Technik bekannten Vorrichtungen verschiedenartige Lösungsvorschläge.

In der Offenlegungsschrift DE 10 2009 057 484 A1 wird eine Möglichkeit zur Befestigung und Zentrierung eines Komplettkolbens auf einer Kolbenstange beschrieben. Dabei wird der Komplettkolben axial auf die Kolbenstange aufgeschoben und mit einer rückwärtig angebrachten Mutter in seiner Lageposition gesichert. Mittels zweier an den Stirnseiten des Komplettkolbens vorgesehenen Fasen soll während der Montage eine selbstständige Zentrierung des Komplettkolbens auf der Kolbenstange erfolgen. Als Nachteil zeigt es sich neben dem Bauraumverbrauch hierbei jedoch, dass die vorgesehene Mutter insbesondere bei den innerhalb eines Hydraulikzylinders wirkenden hohen Kräften sowie Materialspannungen keine ausreichende Befestigung zu gewährleisten scheint.

Des Weiteren wird in der Druckschrift DE 1 894 963 U eine hydraulische Kolbeneinheit offenbart, welche eine Kolbenstange sowie einen zweigeteilten Kolben umfasst. Zwischen dem Ober- und Unterteil des Kolbens ist in einer Ringnut der Kolbenstange ein aus zwei halbkreisförmigen Teilen bestehender Ring angeordnet. Mittels dieses geteilten Rings soll die axiale Relativbewegung des Kolbens gegenüber der Kolbenstange verhindert werden. Ergänzend zu der Ringnut weist die Kolbenstange zwei Dichtungsnuten zur Einbringung von Dichtringen auf. Eine axiale Verschiebung des Kolbens wird mit Hilfe von Spannschrauben, welche sämtliche Kolbenteile gegeneinander drücken, unterbunden. Kostenseitig und für die Stabilität nachteilig ist die relativ hohe Anzahl von Kolbenteilen sowie der damit verbundene Montageaufwand.

Neben den genannten Kopplungsvarianten ist es auch bekannt, ein Innengewinde am Kolben sowie ein Außengewinde an der Kolbenstange anzubringen, so dass diese durch Verschraubung ineinander greifen und somit befestigt werden. Ein wesentlicher Nachteil der Kopplung mittels Gewinde besteht darin, dass eine zuverlässige Sicherung gegen ungewolltes Lösen und zugleich die Aufrechterhaltung der Demontagemöglichkeit des Systems nur durch Zusatzmaßnahmen möglich ist.

Letztlich ist es in diesem Zusammenhang auch bekannt, Kolben und Kolbenstange mit Hilfe von Schrauben kraftschlüssig zu verbinden. Dabei wird das Schraubengewinde kolbenseitig derart eingebracht, dass die kopfseitige Innenfläche der Schraube den Kolben gegen die Kolbenstange drückt. Die Druckschrift GB2276220 offenbart eine bekannte Kolbeneinheit.

Die Aufgabe der Erfindung ist es, unter Vermeidung der Nachteile des Standes der Technik, eine Kolbeneinheit eines Hydraulikzylinders bereitzustellen, welche die Aufnahme hoher Zug- und Druckkräfte ermöglicht, eine hohe Betriebssicherheit und Herstellungsgenauigkeit gewährleistet, einfach montierbar und demontierbar sowie kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Kolbeneinheit eines Hydraulikzylinders weist eine Kolbenstange, einen Kolben sowie eine Mehrzahl an Zylinderformkörpern auf. Kolbenstange und Kolben werden auch zusammengefasst als Kopplungspartner bezeichnet.

Die Kolbeneinheit ist im Inneren eines Zylinderrohrs aufnehmbar, wobei die Kolbenstange während des Betriebs eine axiale Hubbewegung parallel zur Längsachse des Zylinderrohrs ausführt. Die Kolbenstange weist wie der Kolben vorzugsweise eine zylindrische Gestalt auf.

Gemäß der vorliegenden Erfindung weist die Kolbenstange entlang ihres Außenumfangs eine erste Radialnut auf. Des Weiteren weist der Kolben entlang seines Innenumfangs eine zweite Radialnut auf. Dabei weisen die erste und zweite Radialnut nach der erfolgten Montage der Kolbeneinheit erfindungsgemäß eine übereinstimmende axiale Lageposition sowie eine übereinstimmende axiale Erstreckung auf, so dass diese einen gemeinsamen Ringraum ausbilden. Der entstandene Ringraum weist einen rechteckigen Hohlquerschnitt auf. Der Ringraum umgibt die Kolbenstange im Bereich der ersten Radialnut umlaufend.

Zudem weist der Kolben einen Zugangskanal auf, welcher außenseitig durch den Außenumfang des Kolbens und innenseitig durch die zweite Radialnut begrenzt ist. Somit wird durch den Zugangskanal ein Zugang zu dem Ringraum bereitgestellt.

Einen weiteren Bestandteil der erfindungsgemäßen Kolbeneinheit stellen die Zylinderformkörper dar, welche in dem Ringraum so angeordnet sind, dass die Längsachse der Zylinderformkörper parallel zu der Längsachse der Kolbenstange und des Kolbens ausgerichtet ist. Bei einer derartigen Ausrichtung treten die Stirnflächen der Zylinderformkörper in Formschluss zu den axialen Wandungen des Ringraums. Vorzugsweise unterschreitet der Durchmesser der Zylinderformkörper die radiale Erstreckung des Hohlquerschnitts nur geringfügig, so dass sich die Zylinderkörper gegen den Nutengrund sowohl der ersten als auch der zweiten Radialnut abstützen und nicht kippen oder sich radial bewegen. Zudem sind die Zylinderformkörper bevorzugt in so hoher Zahl vorhanden, dass sie im Umfang des Ringraums ohne seitliche Abstände angeordnet sind und sich wechselseitig abstützen und auch in Umfangsrichtung nicht kippen und sich nicht bewegen.

Die Einbringung der Zylinderformkörper wird mit Hilfe des Zugangskanals realisiert, über welchen diese auf einfache Weise in die gewünschte Lageposition innerhalb des Ringraums einsetzbar sind. Die Zylinderformkörper können in dem Ringraum durch ein Nachschieben weiterer Zylinderformkörper fortbewegt werden. Notwendigerweise sind die Zylinderformkörper dabei so zu dimensionieren, dass deren Durchmesser und Höhe den Querschnitt des Zugangskanals nicht übersteigt. Nachdem die Zylinderformkörper in ausreichender Anzahl eingebracht sind, also so, dass der Ringraum im Wesentlichen mit Zylinderformkörpern ausgefüllt ist, wird der Zugangskanal verschlossen. Umgekehrt wird zur Demontage der Zugangskanal wieder geöffnet, so dass die Zylinderformkörper hierüber wieder entfernt werden können. Im einfachsten Fall können diese bei geeigneter Lage der Kolbeneinheit bereits allein durch deren Schwerkraft herausfallen.

Als Zylinderformkörper ist als erfindungsgemäß jeder Körper erfasst, dessen grundsätzliche Gestalt durch eine zylindrische Form geprägt ist und insbesondere eine Grundfläche und eine Deckfläche aufweist, die planparallel zueinander angeordnet sind. Geeignet ist jeder Zylinderformkörper, welcher die für den Anwendungsfall des Hydraulikzylinders erforderlichen materialspezifischen Parameter erfüllt.

Die in dem Ringraum befindlichen Zylinderformkörper stellen eine Kopplung des Kolbens mit der Kolbenstange bereit und ermöglichen eine axiale Kraftübertragung zwischen den Kopplungspartnern. Dabei kann die axiale Kraftübertragung in beiden Richtungen erfolgen, so dass über die Kolbenstange sowohl Zug- als auch Druckkräfte übertragbar sind.

Daher ist es erforderlich, dass die Zylinderformkörper den insbesondere im Bereich der Hochdruckhydraulik wirkenden großen Kräften und sich ergebenden Flächenpressungen auf den Stirnflächenabschnitten standhalten und zugleich die notwendige Betriebssicherheit und Funktionalität für einen längeren Zeitraum gewährleisten.

Wegen der im Hydraulikkolbenbereich zu übertragenden besonders großen Kräfte würde der Fachmann eine Kopplung mit Sperrkörpern nicht als denkbare Kopplungsvariante in Betracht ziehen.

In diesem Zusammenhang wurde aber überraschenderweise gefunden, dass durch die Verwendung von Zylinderformkörpern auch bei sehr großen Kräften und Betriebsdrücken eine zuverlässige Art der Kopplung bereitstellbar ist. Dies ist auf das Zusammenwirken der besonderen Geometrie der Zylinderformkörper und des Ringraums zurückzuführen, so dass die axial wirkenden Kräfte über die Stirnfläche der Zylinderformkörper und korrespondierend über die axialen Wandungsbereiche des Ringraums übertragen werden. Dagegen ist wegen der hohen axialen Kräfte, die in der Hochdruckhydraulik auftreten, der Einsatz von Sperrkörpern wie Kugeln, bei denen Kräfte durch Linien- oder Punktberührung übertragen werden, auszuschließen. Die Einbringung von Zylinderformkörpern bietet gegenüber den aus dem Stand der Technik bekannten Kopplungsvarianten bei Kolbeneinheiten zudem erhebliche Vorteile bezüglich der einfachen Lösbarkeit der Verbindung von Kolben und Kolbenstange, sowie deren Herstellung und Herstellungsgenauigkeit.

Eine erfindungsgemäße Kolbeneinheit eines Hydraulikzylinders weist insbesondere die nachfolgenden Vorteile auf.

Der erste entscheidende Vorteil ist die Übertragung axialer Kräfte durch formschlüssige Kopplung über die Stirnflächen der Zylinderformkörper, wodurch größere Axialkräfte übertragbar sind als es bei einer Punkt- oder Linienberührung der Fall sein kann.

Als Vorteil ergibt sich, dass eine mittels eingebrachter Zylinderformkörper gekoppelte Kolbeneinheit für ein breites Spektrum an Anwendungsbereichen auf dem Gebiet der Hydraulik geeignet ist. Dies beruht insbesondere auf der Eignung für besonders hohe Betriebsdrücke und Kräfte.

Ein zweiter Vorteil ergibt sich dahingehend, dass die bereitgestellte Kopplung auf einfache Art und Weise lösbar ist und die Kolbeneinheit als Baugruppe dementsprechend mit geringem Aufwand demontierbar ist. Aufgrund dessen ist auch bei einem im Einsatz befindlichen hydraulischen System, beispielsweise im Landmaschinenbau, Schiffsbau, Müllfahrzeugeinsatz und Ähnlichem sogar vor Ort die Möglichkeit einer einfachen Demontage und Montage gegeben.

Ein dritter Vorteil ergibt sich durch die hohe Betriebssicherheit durch einen gesicherten Formschluss, da bei einer in einen Zylinder eingesetzten Kolbeneinheit der vorzugsweise mit einem Verschlussstift versehene Zugangskanal im Kolben zwangsläufig durch die Zylinderwandung verschlossen ist, so dass die Zylindersperrkörper nicht austreten können und ein Lösen der Kopplung ausgeschlossen ist.

Ein sehr wesentlicher vierter Vorteil ergibt sich, da keine Vorspannung auf die Kolbenstange erfolgt, wie es beispielsweise im Falle der Kopplung mittels Gewinde erforderlich ist, und die Dimensionierung des kleinsten Durchmessers der Kolbenstange, unter Beachtung der Größe der Zylinderformkörper, ausschließlich auf die äußeren Betriebskräfte erfolgen kann. Hierdurch ist eine Materialeinsparung durch eine Minderung des Kolbenstangendurchmessers möglich. Letztlich besteht ein weiterer Vorteil darin, dass die erfindungsgemäß eingesetzten Zylinderformkörper kostengünstig bereitstellbar sind. Dabei können beispielsweise Teile anderer mechanischer Bauelemente genutzt werden, insbesondere die Walzen von Wälzlagern. Diese entsprechen in der Regel den materialtechnischen Anforderungen und sind auch hinsichtlich Größe und Form geeignet.

Erfindungsgemäß stehen das kolbenseitige Ende der Kolbenstange und der Kolben in einem flächigen Druckkontakt. Mittels dieser Maßnahme wird bei einem Ausfahrhub der dann druckbelasteten Kolbenstange eine Entlastung der Zylinderformkörper erzielt, da diese die in dieser Richtung axial wirkenden Kräfte nicht aufnehmen müssen. Vielmehr wird die Kraft dann über den Druckkontakt direkt zwischen Kolben und Kolbenstange übertragen. Erfindungsgemäß ist die Kolbenstange in eine Sacklochbohrung des Kolbens eingesetzt und steht auf dem Sacklochgrund druckkontaktbildend auf. Bei einem Differentialarbeitszylinder liegt bei gleichem Fluiddruck eine größere Kraft bei einem Ausfahrhub - als Druckkraft - und eine kleinere Kraft bei einem Einfahrhub - als Zugkraft - vor, weil die im Kolbenraum wirksame Kolbenfläche größer ist als die im Kolbenstangenraum wirksame Kolbenfläche; im Kolbenstangenraum ist die wirksame Kolbenfläche um die Grundfläche der Kolbenstange geringer. Als besonderer Vorteil müssen die Zylinderformkörper und die Radialnuten nur so dimensioniert werden, dass sie die geringere Zugkraft aufnehmen können, da die Druckkraft direkt zwischen Kolben und Kolbenstange übertragen werden.

Erfindungsgemäß ist die Kolbenstange gegenüber dem Kolben mittels eines umlaufenden Dichtrings abgedichtet. Dabei kann der Dichtring beliebig auf einer der beiden Seiten der Radialnuten in axialer Richtung angeordnet sein.

Da es sich um eine Kolbeneinheit eines Differentialarbeitszylinders handelt, bei welcher die Kolbenstange in eine Sacklochbohrung eingesetzt ist, wird mittels des Dichtrings der Bereich des Sacklochgrundes gegenüber dem Fluid des Kolbenstangenraumes abgedichtet. Damit wird verhindert, dass das Fluid in diesen Bereich eindringt und auf die Kolbenstangengrundfläche wirkt. Somit wird vermieden, dass sich in einem Einfahrhub eine gemäß dem Fluiddruck und der Kolbenstangengrundfläche ergebende axiale Kraft zwischen Kolbenstange und Kolben aufbaut. Vielmehr beschränkt sich in einem Einfahrhub die von den Zylinderformkörpern zu übertragende Kraft auf die Kraft, die sich aus dem Fluiddruck und der Kolbenfläche abzüglich der Kolbenstangengrundfläche ergibt. Erfindungsgemäß ist die Kombination mit der vorstehend beschriebenen Weiterbildung der im Druckkontakt zum Kolben stehenden Kolbenstange sinnvoll, da in jeder axialen Richtung die Zylinderformkörper weniger belastet werden.

Gemäß einer vorteilhaften Weiterbildung der Erfindung weisen sämtliche Zylinderformkörper die selbe Form und Größe auf. Zum einen wird somit die Komplexität des Aufbaus der Kolbeneinheit und des Kopplungsmechanismus gering gehalten, wobei zugleich eine weitere Kosteneinsparung ermöglicht wird. Zum anderen wird sichergestellt, dass sämtliche Zylinderformkörper gleichmäßig belastet werden und folglich ein ungleichmäßiger Verschleiß verhindert wird.

Nach einer weiteren bevorzugten Ausgestaltung bestehen die Zylinderformkörper aus einem Material höherer Festigkeit als das Material von Kolbenstange oder Kolben; vorzugsweise bestehen die Zylinderformkörper aus hochfestem Stahl. Somit wird sichergestellt, dass die Zylinderformkörper die für den Einsatz innerhalb eines Hydraulikzylinders erforderlichen Kriterien erfüllen und die Anwendung hoher Betriebsdrücke bzw. Betriebsspannungen ermöglichen. Die Festigkeit ist höher als die der Kolbenstange oder des Kolbens, wobei der Kopplungspartner mit der geringeren Festigkeit maßgeblich ist.

Es gilt der Zusammenhang, dass neben der wirksamen Fläche die geringste zulässige Flächenpressung des Materials der Zylinderkörper sowie der weiteren Kopplungspartner die erwünschte maximale axiale Kraft des Hydraulikzylinders begrenzt und somit den maximal zulässigen Betriebsdruck in Abhängigkeit von dem Kolbendurchmesser bestimmt.

Bevorzugt weist das Material der Zylinderkörper eine 1,2-fach höhere zulässige Flächenpressung auf als das Material von Kolben oder Kolbenstange, wobei der Kopplungspartner mit der geringeren Festigkeit maßgeblich ist.

Eine bevorzugte Weiterbildung der vorliegenden Erfindung sieht zudem vor, dass die Eckbereiche des aus den beiden Radialnuten gebildeten Ringraums jeweils abgerundet sind. Besonders vorteilhaft lassen sich so Kerbspannungen vermeiden.

In einer vorteilhaften Weiterbildung ist der Zugangskanal radial angeordnet. Ein radial angeordneter Zugangskanal lässt sich als besonderen Vorteil sehr einfach bereitstellen. Vorteilhafterweise ist es auch bei einem radial angeordneten Zugangskanal problemlos möglich, die Zylinderformkörper einzuführen, da diese rollfähig sind und sich im Ringraum ohne Zusatzmaßnahmen verteilen.

Der Zugangskanal verläuft gemäß einer weiteren zu vorteilhaften Variante tangential zu dem Ringraum. Somit wird besonders vorteilhaft die Einbringung der Zylinderformkörper in den Ringraum erleichtert und der Verbleib der Zylinderformkörper in der Endlage in dem Ringraum sichergestellt.

Die Erfindung wird als Ausführungsbeispiel anhand von

Fig. 1    teilweise geschnittene Teilansicht eines Hydraulikzylinders mit einer Kolbeneinheit, nicht im Rahmen der Erfindung;

Fig. 2 teilweise geschnittene Gesamtansicht eines Hydraulikzylinders mit einer Kolbeneinheit, nicht im Rahmen der Erfindung;

Fig. 3 geschnittene Teilansicht eines Hydraulikzylinders mit einer nicht erfin-dungsgemäßen Kolbeneinheit mit am Kolben nicht anliegender Kolbenstange,

Fig. 4 geschnittene Teilansicht eines Hydraulikzylinders mit einer erfindungsgemäßen Kolbeneinheit mit am Kolben anliegender Kolbenstange,

Fig. 5 teilweise geschnittene Gesamtansicht eines als Gleichlaufzylinder ausgebildeten Hydraulikzylinders mit Kolbeneinheit, nicht im Rahmen der Erfindung;

Fig. 6 Gesamtansicht einer Kolbeneinheit mit Kolbenstange und Kolben,

Fig. 7 Schnitt entlang der Ebene B-B in Fig. 6 mit Darstellung der Zylinderformkörper und eines radialen Zugangskanals,

Fig. 8 Schnitt entlang der Ebene B-B in Fig. 6 mit Darstellung der Zylinderformkörper und eines radialen Zugangskanals mit einem Verschlussstift,

Fig. 9 Schnitt entlang der Ebenen C-C in Fig. 2 mit Darstellung der Zylinderformkörper und eines tangentialen Zugangskanals näher erläutert.

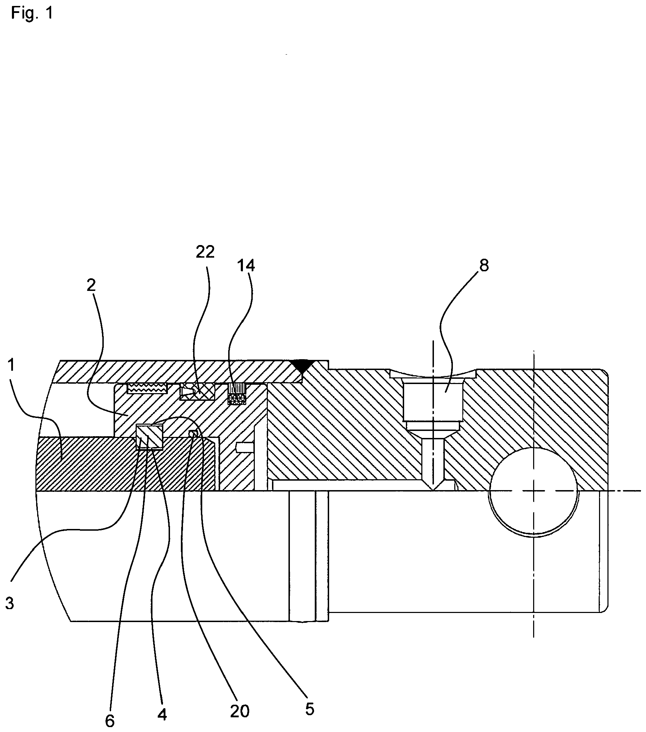

Fig. 1 zeigt eine Teilansicht eines Hydraulikzylinders mit einer nicht erfindungsgemäßen Kolbeneinheit, bei welcher insbesondere der Bereich der Kopplung von Kolben 2 und Kolbenstange 1 ersichtlich wird. Die Kolbenstange 1 weist hierbei entlang ihres Außenumfangs eine erste Radialnut 4 auf, während der Kolben 2 entlang seines Innenumfangs eine zweite Radialnut 5 aufweist. Die beiden Radialnuten bilden gemeinsam einen Ringraum 6 aus, welcher durch einen rechteckigen Querschnitt gekennzeichnet ist und als Hohlraum ausgebildet ist. In dem Ringraum 6 sind mehrere Zylinderformkörper 3 zu Kopplungszwecken angeordnet. Aufgrund der Schnittebene von Fig. 1 zeigen die Bezugszeichen 6 und 3 auf den gleichen Bereich. Im Betriebsfall wird mittels des rückseitig angeordneten Hauptanschlusses 8 ein Fluid in den Hydraulikzylinder eingebracht, so dass eine Druckbeaufschlagung erfolgt. Somit ist es erforderlich, die an der rückseitigen Stirnseite des Kolbens 2 entstehenden axialen Kräfte über die kolbenseitige Stirnfläche des Ringraums 6 auf die kolbenstangenseitige Stirnfläche zu übertragen, wodurch die Kolbenstange 1 aus dem Hydraulikzylinder ausfährt.

Zudem ist ein umlaufender Dichtring 20 vorgesehen, welcher sowohl bei einem Einfahren als auch bei einem Ausfahren der Kolbenstange 1 die Konstanz des erwünschten Kolbenflächenverhältnisses $\varphi$ gewährleistet, indem er das Einringen von Fluid in den Raum des Sacklochs zwischen Kolbenstange 1 und Kolben 2 verhindert und somit die der Kolbenstangengrundfläche gegenüberliegende Teilfläche des Kolbens bei einer Druckbeaufschlagung im Kolbenstangenraum hydraulisch unwirksam macht.

Das vorliegende Kolbenflächenverhältnis ist gemäß der nachstehenden Formel ermittelbar, wobei $d_K$ den Durchmesser des Kolbens und $d_{Kst}$ den Durchmesser der Kolbenstange bezeichnet.

$$\varphi = \frac{d_K{}^2}{d_K{}^2 - d_{Kst}{}^2}$$

Die besondere Vorteilhaftigkeit der Nutzung von Zylinderformkörpern 3 zur Kopplung von Kolben 2 und Kolbenstange 1 wird nachfolgend anhand konkreter Zahlenwerte des Ausführungsbeispiels mathematisch nachgewiesen. Hierzu ist es notwendig, die maximal zulässige Druckkraft $F_{max}$ sowie den maximal zulässigen Betriebsdruck $p_{max}$ zu berechnen. Die Einheiten sind in den Gleichungen aus Platzgründen jeweils ausschließlich bei dem Ergebis aufgeführt.

Als Werkstoffe kommt hierbei die Stahlsorte S 355 J2G3 für den Kolben 2, die Kolbenstange 1 und die Zylinderformkörper 3 zum Einsatz. Ausgehend von den Werkstoffeigenschaften von S 355 J2G3 soll im Ausführungsbeispiel die maximale Flächenpressung 230 N/mm² betragen, wobei hier bereits hohe Sicherheitsfaktoren berücksichtigt sind.

Für die verwendeten Zylinderformkörper 3 wurde im erläuterten Beispiel ein Durchmesser $d_z$ von 6 mm sowie eine Länge von ebenfalls 6 mm gewählt.

Insgesamt ist eine Anzahl $n$ von 13 Zylinderformkörpern 3 in dem Ringraum 6 anzuordnen. Die Anzahl $n$ der Zylinderformkörper 3 ergibt sich aus deren Durchmesser sowie anhand des Umfangs $U_{Kst}$ der Kolbenstange, welcher zugleich die Summe der Durchmesser sämtlicher Zylinderformkörper 3 repräsentiert. Der Durchmesser der Kolbenstange $d_{Kst}$ beträgt im vorliegenden Beispiel 25 mm.

$$U_{Kst} = d_{Kst} * \pi = 25 * \pi = 78{,}54 \; mm$$

$$n = \frac{U_{Kst}}{d_Z} = \frac{78,54}{6} = 13,09$$

Da bei Verwendung von Zylinderformkörpern 3 eine stirnseitige Lastaufnahme erfolgt, besteht die Notwendigkeit die Stirnfläche $A_{Stirn}$ zu bestimmen.

$$A_{Stirn} = 6^2 * \frac{\pi}{4} = 28,27 \; mm^2$$

Aufgrund der Tatsache, dass jeweils nur die Hälfte der Stirnflächen belastet wird, ergibt sich der tragende Wert pro Zylinderformkörper 3 zu:

$$\frac{A_{Stirn}}{2} = \frac{28,27}{2} = 14,14 \; mm^2$$

Dementsprechend ergibt sich der Gesamtwert für eine Anzahl von 13 Zylinderformkörpern 3 zu:

$$A_{ges} = 14,14 * 13 = 183,82 \; mm^2$$

Letztlich kann auf Basis der erhaltenen Werte die maximal zulässige Druckkraft $F_{max}$ sowie der maximal zulässige Betriebsdruck $p_{max}$ wie folgt bestimmt werden, wobei der Durchmesser des Kolbens im Berechnungsbeispiel 60 mm beträgt.

$$F_{max} = A_{ges} * p_{max\,FL} = 183,82 * 230 = 42.278,6 \; N$$

$$p_{max} = \frac{42.278,6}{60 * 60 * \frac{\pi}{4}} = 14,95 \; MPa = 149,5 \; bar$$

Es wird somit ersichtlich, dass eine sichere Verwendung der Kopplung mittels Zylinderformkörpern 3 bis zu einer Druckkraft von 42.278,6 Newton beziehungsweise bis zu einem Betriebsdruck von nahezu 150 bar möglich ist. Im Vergleich konnte nachgewiesen werden, dass sich bei Formkörpern, deren Kraftübertragung mittels Linienberührung erfolgt, ein mindestens vierfach geringerer zulässiger Betriebsdruck ergibt.

Bei der Dimensionierung der an der axialen Kraftübertragung beteiligten Teile sind die zulässigen Festigkeitskennwert zur Grundlage der Bestimmung des maximal zulässigen Betriebsdrucks zu machen, wobei die schwellende Belastung zu beachten ist.

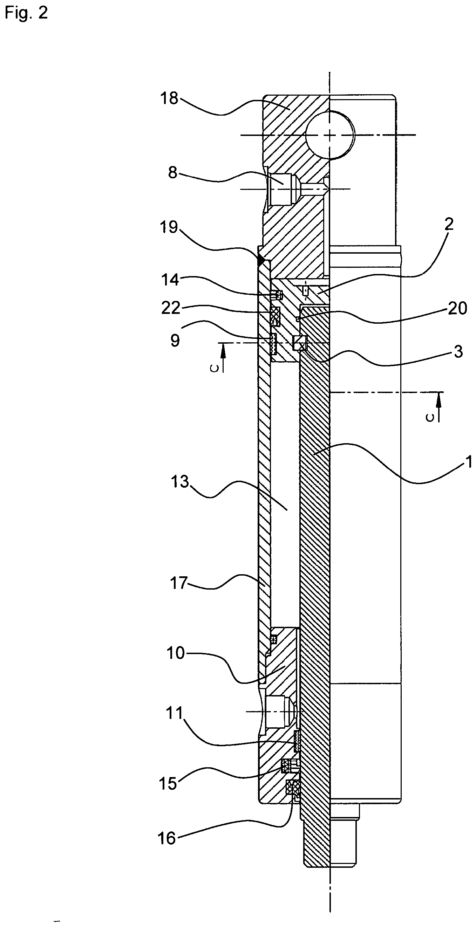

In Fig. 2 erfolgt die Darstellung des gesamten Hydraulikzylinders mit einer nicht erfindungsgemäßen Kolbeneinheit in einer teilweise geschnittenen Ansicht. Dabei werden weitere Details des Hydraulikzylinders aufgezeigt, welche zu einer optimierten Funktionsfähigkeit beitragen.

Die Kolbenstange 1 wird hierbei über das im Kolben 2 vorhandene erste Führungsband 9 sowie über das in der Führung 10 vorhandene zweite Führungsband 11 radial geführt. Die Abdichtung des Kolbensraumes 12 gegenüber dem Kolbenstangenraum 13 erfolgt mittels der Kolbendichtung 14. Zusätzlich ist im vorliegenden Ausführungsbeispiel eine Kolbenzusatzdichtung 22 vorhanden. Um einen Austritt des Fluides aus dem Kolbenstangenraum 13 zu verhindern, ist zudem eine weitere Dichtung 15 innerhalb der Führung 10 integriert.

Da durch das vorderseitige Ausfahren der Kolbenstange 1 im Rahmen der Hubbewegung eine erhöhte Gefahr besteht, dass äußere Verschmutzungen in den Innenraum des Hydraulikzylinders eintreten, wird in der Führung 10 ein Abstreifer 16 vorgesehen, welcher etwaigen auf der Kolbenstangenmantelfläche angelagerten Schmutz abschiebt.

Die Führung 10 ist im vorliegenden Ausführungsbeispiel über ein Gewinde mit dem Zylinderrohr 17 in grundsätzlich bekannter Weise gekoppelt, während das gegenüberliegende Verschlussteil 18 durch die als schwarz ausgefüllte Fläche dargestellte Schweißnaht 19 mit dem Zylinderrohr 17 unlösbar verbunden ist.

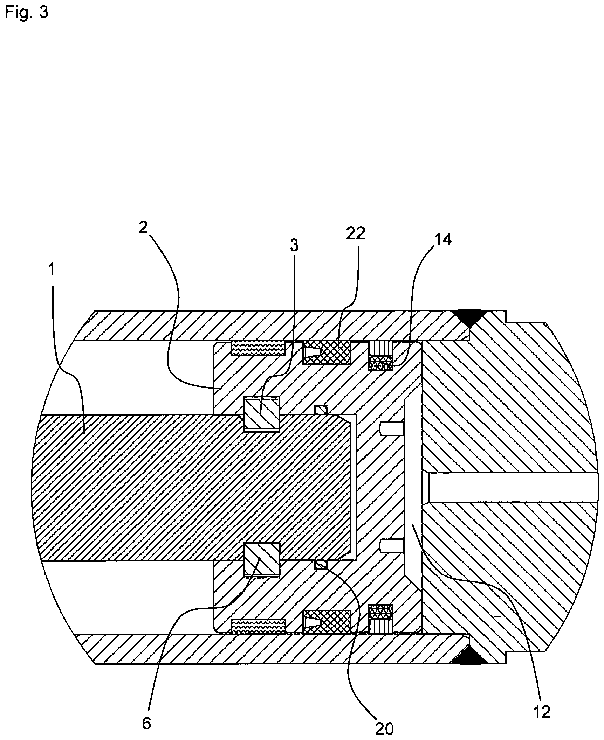

Die Fig. 3 zeigt den Kopplungsbereich einer nicht erfindungsgemäßen Kolbeneinheit in einer geschnittenen Detailansicht.

Fig. 3 zeigt dabei ein Ausführungsbeispiel, nicht in Rahmen der Erfindung, bei welchem ein Abstand zwischen Kolbenstange 1 und Kolben 2 besteht, so dass die Kraftübertragung in beiden Richtungen ausschließlich mittelbar über die Zylinderformkörper erfolgt.

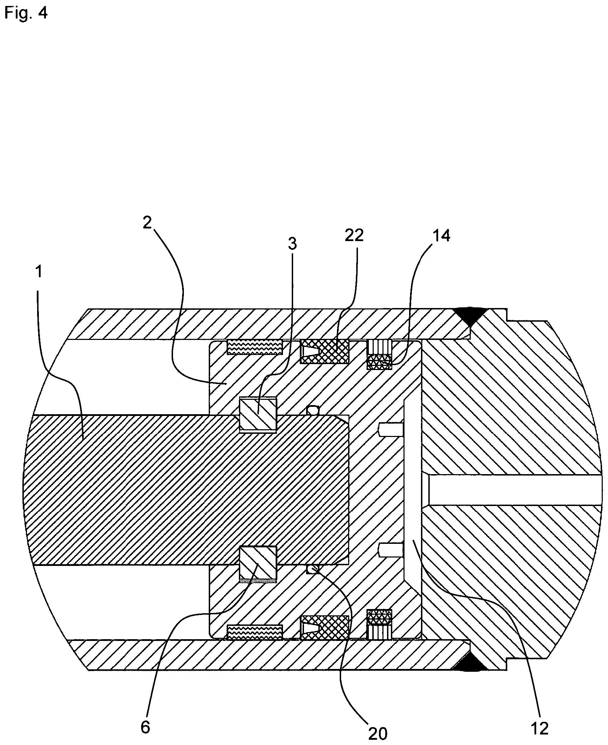

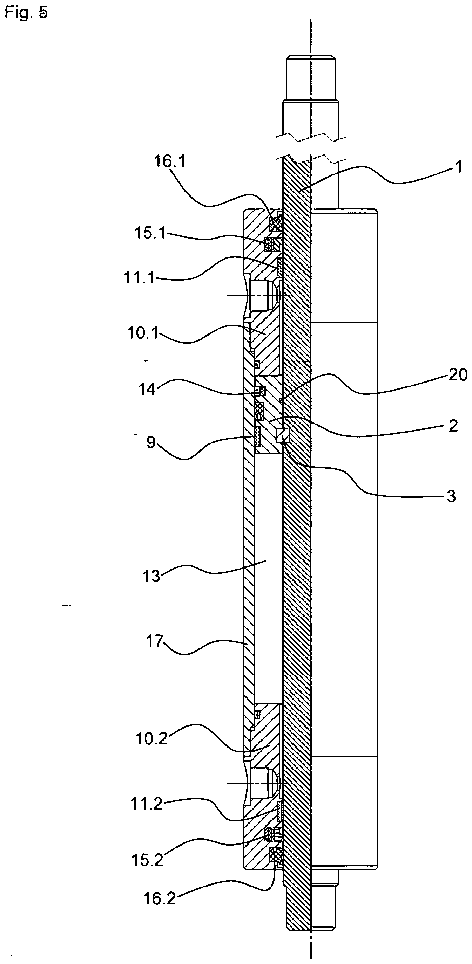

Hingegen wird in Fig. 4 den Kopplungsbereich einer erfindungsgemässen Kolbeneinheit in einer geschnittenen Detailanschicht dargestellt, bei welchem sich die Kolbenstange 1 in direktem Kontakt zu dem Kolben 2 befindet und somit an diesem anliegt. Daher wird bei einer Ausfahrbewegung der Kolbeneinheit der Kolben gegen die Stirnfläche der Kolbenstange 1 gepresst, so dass in dieser Richtung die Kraftübertragung direkt von dem Kolben 2 auf die Kolbenstange 1 erfolgt. Im Rahmen von Fig. 5 erfolgt die Darstellung einer modifizierten Ausführungsform, bei welcher eine nicht erfindungsgemäße Kolbeneinheit als Kolbeneinheit eines Gleichlaufzylinders vorliegt. Dieser weist einen grundsätzlich vergleichbaren Aufbau wie jener in Fig. 2 dargestellte Hydraulikzylinder auf. Um eine gleichartige Nutzung in beiden Betriebsrichtungen zu ermöglichen, durchsetzt die Kolbenstange 1 den Kolben 2 und führt auf beiden Seiten durch Führungen 10.1 und 10.2 auf dem Hydraulikzylinder. Es liegen hierbei abweichend von einem Differenzialarbeitszylinder also jeweils zwei Führungen 10.1, 10.2 mit Führungsbändern 11.1, 11.2, Dichtungen 15.1, 15.2 sowie Abtreifer 16.1, 16.2 vor. Beide Arbeitsräume des Gleichlaufzylinders sind als Kolbenstangenräume ausgebildet. Die Dichtung 20 hat bei einer Kolbeneinheit gemäß dem Ausführungsbeispiel nach Fig. 5 die Funktion, einen Übertritt des Fluids von einem Arbeitsraum in den anderen Arbeitsraum zu verhindern.

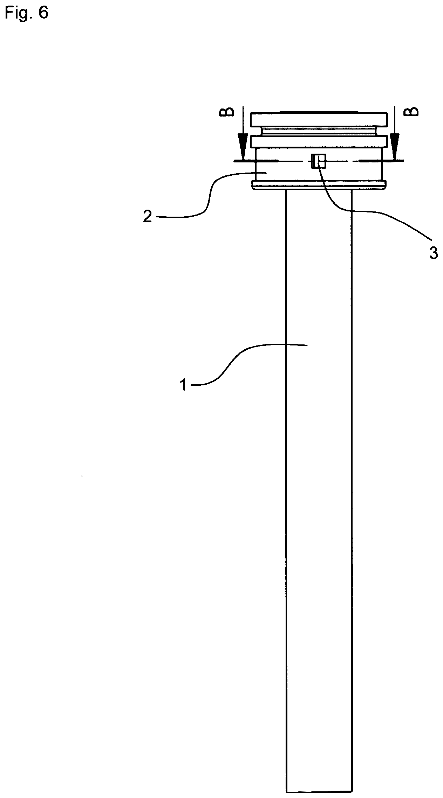

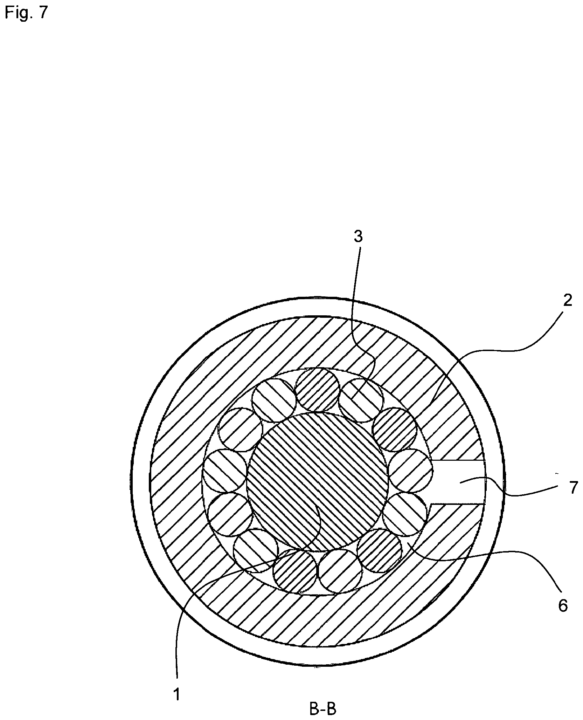

Die erfindungsgemäße Kolbeneinheit eines Differenzialarbeitszylinders, bestehend aus Kolbenstange 1 und Kolben 2, ist in Fig. 6 ohne die umgebenden Komponenten wie Zylinderrohr oder Führung dargestellt. Dabei wird insbesondere die Ortslage der Zylinderformkörper 3 auf Höhe der Schnittebene B-B ersichtlich. Zur Darstellung des Zugangskanals 7 sowie der stirnseitigen Ortslage der Zylinderformkörper 3 zeigt Fig. 7 eine Schnittansicht entlang der in Fig. 6 enthaltenen Ebene B-B. Der zur Einbringung der Zylinderformkörper 3 erforderliche Zugangskanal 7 ist hierbei radial zu dem Ringraum 6 angeordnet und wird außenseitig durch den Außenumfang des Kolbens 2 sowie innenseitig durch die zweite Radialnut 5 (hier ohne Bezugszeichen) begrenzt.

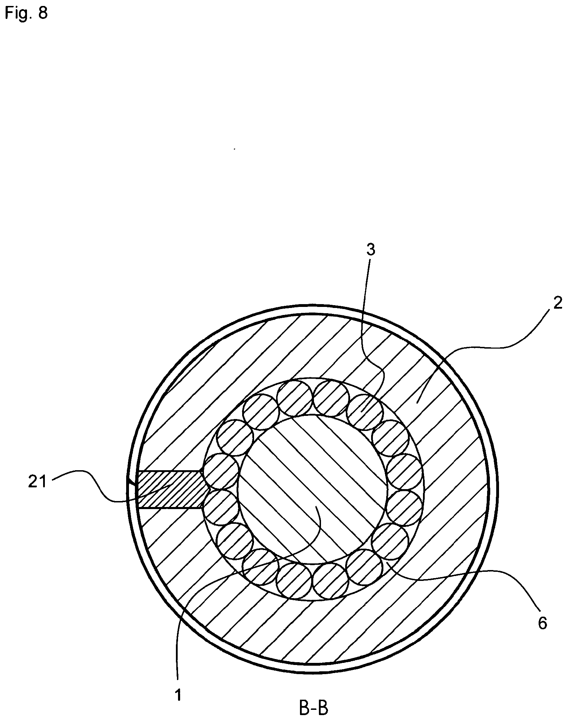

Ergänzend dazu ist gemäß der in Fig. 8 gezeigten Ausführungsvariante ein Verschlussstift 21 vorgesehen, welcher vorliegend aus einem Kunststoff besteht. Dieser ist in den Zugangskanal 7 (hier ohne Bezugszeichen) einbringbar und verhindert in eingesetzer Position ein Austreten der Zylinderformkörper 3 aus dem Ringraum 6. Somit werden die Zylinderformkörper 3 in ihrer Lageposition innerhalb des Ringraums 6 gesichert.

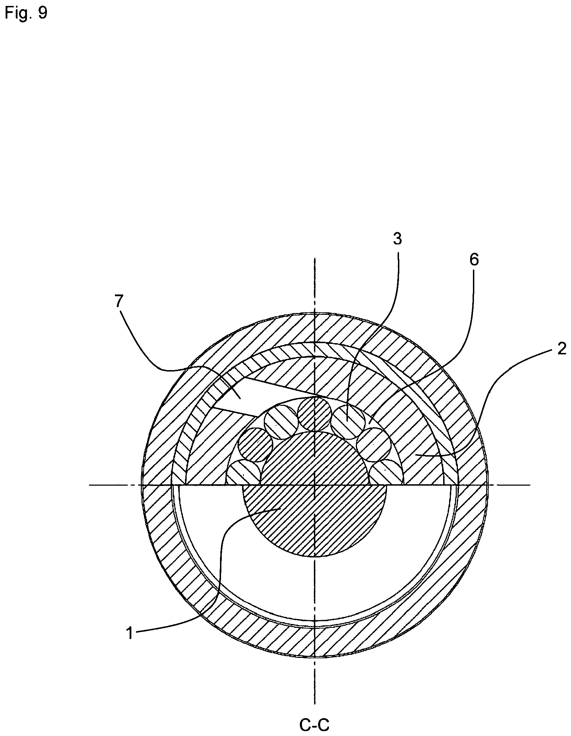

Hingegen zeigt Fig. 9 einen tangential verlaufenden Zugangskanal 7 anhand der in Fig. 2 enthaltenen Schnittebene C-C.

Die Darstellung erfolgt hierbei durch die Schnittebene C-C an zwei verschiedenen Positionen entlang der axialen Erstreckung des Hydraulikzylinders, so dass der Kolben 2 zum einen in einer Schnittansicht (obere Hälfte von Fig. 9) und zum anderen in einer Draufsicht (untere Hälfte von Fig. 9) gezeigt wird. Die Darstellung erfolgt in der als Halbschnitt dargestellten Zylindereinheit, so dass die Kopplung des Kolbens 2 mit der Kolbenstange 1 deutlich sichtbar wird. Des Weiteren wird ersichtlich, dass die Kolbenstange 1 in der Schnittebene auf Höhe des Ringraums 6 einen geringeren Durchmesser als an den sonstigen Stellen ihrer axialen Erstreckung aufweist.

Der tangential zu dem Ringraum 6 angeordnete Zugangskanal 7 wird hierbei wiederum außenseitig durch den Außenumfang des Kolbens 2 sowie innenseitig durch die zweite Radialnut 5 (hier ohne Bezugszeichen) begrenzt.

Verwendete Bezugszeichen

1 Kolbenstange
2 Kolben
3 Zylinderformkörper
4 erste Radialnut
5 zweite Radialnut
6 Ringraum
7 Zugangskanal
8 Hauptanschluss
9 erstes Führungsband
10 Führung
11 zweites Führungsband
12 Kolbenraum
13 Kolbenstangenraum
14 Kolbendichtung
15 Dichtung

16    Abstreifer
17    Zylinderrohr
18    Verschlussteil
19    Schweißnaht
20    Dichtring
21    Verschlussstift
22    Zusatzkolbendichtung

**Patentansprüche**

1.  Kolbeneinheit für einen Hydraulikzylinder, die im Inneren eines Zylinderrohrs aufnehmbar ist und während des Betriebs eine axiale Hubbewegung parallel zur Längsachse des Zylinderrohrs ausführen kann, die Kolbeneinheit aufweisend eine Kolbenstange (1), einen Kolben (2) sowie eine Mehrzahl an Zylinderformkörpern (3), wobei die Kolbenstange (1) entlang eines Außenumfangs eine erste Radialnut (4) aufweist und wobei der Kolben (2) entlang eines Innenumfangs eine zweite Radialnut (5) aufweist, wobei die erste (4) und zweite Radialnut (5) die selbe axiale Lageposition und axiale Erstreckung aufweisen, wobei die erste (4) und zweite Radialnut (5) einen gemeinsamen umlaufenden Ringraum (6) ausbilden, welcher einen rechteckigen Hohlquerschnitt aufweist, wobei der Kolben (2) einen Zugangskanal (7) aufweist, welcher außenseitig durch den Außenumfang des Kolbens (2) und innenseitig durch die zweite Radialnut (5) begrenzt ist, wobei der Zugangskanal (7) einen Zugang zu dem Ringraum (6) bereitstellt und wobei die Mehrzahl an Zylinderformkörpern (3) in dem Ringraum (6) so angeordnet sind, dass eine Längsachse der Zylinderformkörper (3) parallel zu einer Längsachse der Kolbenstange (1) und des Kolbens (2) ausgerichtet ist, wobei die Stirnflächen der Zylinderformkörper in Formschluss zu den axialen Wandungen des Ringraums (6) stehen, wobei die Zylinderformkörper (3) über den Zugangskanal (7) in den Ringraum (6) einbringbar sind, wobei die Kolbenstange (1) in eine Sacklochbohrung des Kolbens (2) eingreift und in einem flächigen Druckkontakt mit dem Kolben (2) steht, **dadurch gekennzeichnet, dass** die Kolbenstange (1) gegenüber dem Kolben mittels eines umlaufenden Dichtrings (20) abgedichtet ist.

2.  Kolbeneinheit für einen Hydraulikzylinder nach einem der vorherigen Ansprüche,
    **dadurch gekennzeichnet,**
    **dass** sämtliche Zylinderformkörper (3) die selbe Form und Größe aufweisen.

3.  Kolbeneinheit für einen Hydraulikzylinder nach einem der vorherigen Ansprüche,
    **dadurch gekennzeichnet,**
    **dass** die Zylinderformkörper (3) aus einem Material höherer Festigkeit als dem Material von Kolbenstange (1) oder Kolben (2) bestehen.

4.  Kolbeneinheit für einen Hydraulikzylinder nach einem der vorherigen Ansprüche,
    **dadurch gekennzeichnet,**
    **dass** die Eckbereiche der ersten (4) und der zweiten Radialnut (5) jeweils abgerundet sind.

5.  Kolbeneinheit für einen Hydraulikzylinder nach einem der vorherigen Ansprüche,
    **dadurch gekennzeichnet,**
    **dass** der Zugangskanal (7) radial zu dem Ringraum (6) verläuft.

6.  Kolbeneinheit für einen Hydraulikzylinder nach einem der Ansprüche 1 bis 4,
    **dadurch gekennzeichnet,**
    **dass** der Zugangskanal (7) tangential zu dem Ringraum (6) verläuft.
    HIERZU NEUN SEITEN ZEICHNUNGEN

**Claims**

1.  A piston unit for a hydraulic cylinder, which can be accommodated inside a cylinder tube and is capable of performing an axial stroke movement parallel to the longitudinal axis of the cylinder tube during operation, the piston unit comprising a piston rod (1), a piston (2) and a plurality of cylinder formed bodies (3), wherein the piston rod (1) has a first radial groove (4) along an outer circumference and wherein the piston (2) has a second radial groove (5) along an inner circumference, wherein the first (4) and second radial groove (5) have the same axial position and axial extent, wherein the first (4) and second radial groove (5) form a common circumferential annular space (6) which has a rectangular hollow crosssection, wherein the piston (2) has an access channel (7) which is bounded by the outer circumference of the piston (2) on the outside and by the second radial groove (5) on the inside, wherein the access channel (7) provides an access to the annular space (6), and wherein the plurality of cylinder formed bodies (3) are arranged in the annular space (6) in such a manner that a longitudinal axis of the cylinder formed bodies (3) is aligned parallel to a longitudinal axis of the piston rod (1) and of the piston (2), wherein the front surfaces of the cylinder formed bodies have a positive fit with the axial walls of the annular space (6), wherein the cylinder formed bodies (3) can be introduced into the annular space (6) via the access channel (7), wherein the piston rod (1) engages in a blind hole of the piston (2) and is in two-dimensional pressure contact with the piston (2), **characterized in that** the piston rod (1) is sealed against the piston by means of a circumferential sealing ring (20).

2. The piston unit for a hydraulic cylinder according to claim 1, **characterized in that** all the cylinder formed bodies (3) have the same shape and size.

3. The piston unit for a hydraulic cylinder according to any of the preceding claims, **characterized in that** the cylinder formed bodies (3) consist of a material which has a higher strength than the material of the piston rod (1) or piston (2).

4. The piston unit for a hydraulic cylinder according to any of the preceding claims, **characterized in that** each of the corner regions of the first (4) and the second radial groove (5) are radiused.

5. The piston unit for a hydraulic cylinder according to any of the preceding claims, **characterized in that** the access channel (7) runs radially to the annular space (6).

6. The piston unit for a hydraulic cylinder according to any of claims 1 to 4, **characterized in that** the access channel (7) runs tangentially to the annular space (6).

**Revendications**

1. Unité de piston d'un vérin hydraulique, qui peut être logée à l'intérieur d'un tube de vérin et qui, pendant le fonctionnement, peut effectuer un mouvement de levage axial parallèlement à l'axe longitudinal du tube de vérin, l'unité de piston comprenant une tige de piston (1), un piston (2) ainsi qu'une pluralité de corps moulés cylindriques (3), la tige de piston (1) présentant une première rainure radiale (4) le long d'une périphérie extérieure et le piston (2) présentant une deuxième rainure radiale (5) le long d'une périphérie intérieure, la première (4) et la deuxième rainure radiale (5) présentant la même position axiale et la même extension axiale, la première (4) et la deuxième rainure radiale (5) formant un espace annulaire périphérique commun (6) qui présente une section transversale creuse rectangulaire, le piston (2) présentant un conduit d'accès (7), qui est limité du côté extérieur par la périphérie extérieure du piston (2) et du côté intérieur par la deuxième rainure radiale (5), le conduit d'accès (7) fournissant un accès à l'espace annulaire (6) et la pluralité de corps moulés cylindriques (3) étant disposés dans l'espace annulaire (6) de telle sorte qu'un axe longitudinal des corps moulés cylindriques (3) est orienté parallèlement à un axe longitudinal de la tige de piston (1) et du piston (2), les surfaces frontales des corps moulés cylindriques étant en liaison par complémentarité de formes avec les parois axiales de l'espace annulaire (6), les corps moulés cylindriques (3) pouvant être introduits dans l'espace annulaire (6) par le canal d'accès (7), la tige de piston (1) s'engageant dans un trou borgne du piston (2) et étant en contact par pression à plat avec le piston (2), **caractérisé en ce que** la tige de piston (1) est rendue étanche par rapport au piston au moyen d'une bague d'étanchéité périphérique (20).

2. Unité piston d'un vérin hydraulique suivant une des revendications précédentes, est **caractérisée en ce que** tous les corps moulés cylindriques (3) ont la même forme et la même taille.

3. Unité de piston d'un vérin hydraulique suivant une des revendications précédentes, est **caractérisée en ce que** les corps moulés cylindriques (3) sont constitués d'un matériau de résistance supérieure au matériau de la tige de piston (1) ou du piston (2).

4. Unité de piston d'un vérin hydraulique suivant une des revendications précédentes,
   est **caractérisée en ce**
   **que** les parties de coin de la première (4) et de la deuxième rainure radiale (5) sont respectivement arrondies.

5. Unité de piston d'un vérin hydraulique suivant une des revendications précédentes,
   est **caractérisée en ce**
   **que** le conduit d'accès (7) s'étend radialement par rapport à l'espace annulaire (6).

6. Unité de piston d'un vérin hydraulique suivant une des revendications précédentes 1 à 4,
   est **caractérisée en ce**
   **que** le conduit d'accès (7) s'étend tangentiellement à l'espace annulaire (6).
   VOIR À CE SUJET NEUF PAGES COMPRENANT DES DESSINS

Fig. 1

Fig. 2

Fig. 3

Fig. 4

Fig. 5

Fig. 6

Fig. 7

B-B

Fig. 8

B-B

Fig. 9

C-C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009057484 A1
- DE 1894963 U
- GB 2276220 A